# EUROPÄISCHE PATENTSCHRIFT

(11) **EP 1 206 630 B1**
(45) Veröffentlichungstag und Bekanntmachung des Hinweises auf die Patenterteilung: **16.03.2005**
(21) Anmeldenummer: 00960301.0
(22) Anmeldetag: 21.07.2000
(51) Int. Cl.: F01N 3/20

(54) **VORRICHTUNG ZUM EINBRINGEN EINES ZUSCHLAGSTOFFES IN EIN ABGAS**
DEVICE FOR INTRODUCING AN AGGREGATE INTO AN EXHAUST GAS
DISPOSITIF POUR L'INTRODUCTION D'UN ADJUVANT DANS DES GAZ D'ECHAPPEMENT

(30) Priorität: 22.07.1999 DE 19934413
(43) Veröffentlichungstag der Anmeldung: 22.05.2002
(73) Patentinhaber: SIEMENS AKTIENGESELLSCHAFT, 80333 München (DE)
(72) Erfinder: GANZMANN, Ingo, D-91054 Erlangen (DE); LANGER, Werner, D-96465 Neustadt (DE); RITTER, Hartmut, D-96317 Kronach (DE); ZWACK, Jürgen, D-96145 Sesslach (DE)
(86) Internationale Anmeldenummer: PCT/DE2000/002402
(87) Internationale Veröffentlichungsnummer: WO 2001/007763

(56) Entgegenhaltungen:
- DE-A- 3 642 612
- DE-A- 4 203 807
- DE-A- 4 221 363

## Beschreibung

Die Erfindung betrifft eine Vorrichtung zum Einbringen eines Zuschlagstoffes in ein Abgas (Gasstrom), die in einen Gaskanal, insbesondere in eine Abgasleitung eines Dieselmotors, eingebracht ist, mit mindestens einer Düse und mit mindestens einem Mischer. Der Zuschlagstoff kann ein Reduktionsmittel oder eine dieses freisetzende Verbindung sein.

Eine derartige Vorrichtung ist beispielsweise aus der DE-A-36 42 612 bekannt. Die DE-A-36 42 612 beschreibt dabei eine Vorrichtung zum mischungsintensiven Einbringen von Reduktionsmittel in einen NOₓ-haltigen Abgaskanal. Mit der Vorrichtung soll eine homogene Mischung von Reduktionsmittel und Abgas auf einem relativ kurzen Kanalstück erzielt werden.

Bei der Umsetzung von fossilem oder von aus Pflanzen gewonnenem Brennstoff in mechanische und/oder thermische Energie werden hohe Wirkungsgrade angestrebt. Dabei liegen die Umsetzungstemperaturen häufig derart hoch, dass bei der Umsetzung (Verbrennung) in nennenswertem Umfang Stickoxide (NOₓ) gebildet werden. Dies gilt besonders für Dieselmotoren, die beispielsweise mit mineralischem Öl oder mit Rapsöl betrieben werden.

Da eine Freisetzung der Stickoxide äußerst unerwünscht und daher zu vermeiden ist, werden die Stickoxide üblicherweise katalytisch reduziert. Dies erfordert jedoch die Anwesenheit eines Reduktionsmittels im Abgas einer Energieumsetzungsanlage, beispielsweise in einem Dieselmotor. Es hat sich als zweckmäßig erwiesen, ein derartiges Reduktionsmittel oder einen dieses freisetzenden Zuschlagstoff als Reduktionsmittelträger, insbesondere Ammoniak bzw. (in Wasser gelösten) Harnstoff, dem Abgas erst nach dem Austritt aus der Energieumsetzungsanlage zuzumischen.

Beim Betrieb einer derartigen Vorrichtung oder einer Rauchgasreinigungseinrichtung ist es häufig problematisch, eine ausreichend gute Durchmischung des Abgases oder Gasstroms mit dem Reduktionsmittel zu erreichen. Grund hierfür ist, dass die dazu an sich erforderliche Länge des Gas- oder Abgaskanals, die in der Größenordnung von etwa dem 50-fachen des Kanaldurchmessers liegt, nicht realisierbar ist. Für vergleichsweise kleine Anlagen, wie z. B. Dieselmotoren bis zu einigen 100 kW, besteht prinzipiell die Möglichkeit, einen Reduktionsmittelträger über eine Eindüsvorrichtung, beispielsweise über eine einzelne Düse, und einen dicht hinter dem Motor liegenden Reduktionsmittelgenerator in den Abgaskanal einzuspeisen. Dies ist jedoch bei wachsender Nennleistung mit überproportional wachsenden Kosten verbunden.

Bei vergleichsweise großen Anlagen, beispielsweise bei einem Blockheizkraftwerk oder einem Schiffsantrieb, mit Abgaskanaldurchmessern über 200 mm sind daher üblicherweise mindestens zwei statische Mischer hinter einem eine komplexe Eindüsvorrichtung darstellenden Verdüsungssystem angeordnet. Dabei sind die Abstände dieses Verdüsungssystems und der Mischer voneinander jeweils mindestens gleich dem doppelten Abgaskanaldurchmesser auszuführen. Der Raum für die sich daraus ergebende Abgaskanallänge steht jedoch häufig nicht zur Verfügung.

Der Erfindung liegt daher die Aufgabe zugrunde, eine Vorrichtung der oben genannten Art anzugeben, die den Einsatz sowohl einer Eindüsvorrichtung oder mindestens einer Düse für einen Zuschlagstoff als auch einer Anzahl von erforderlichen Mischern in einem Abgaskanal bei gleichzeitig möglichst geringer Kanallänge ermöglicht. Die Vorrichtung sollte dabei insbesondere in einen runden Gaskanal einsetzbar sein, dessen Durchmesser zwischen ca. 200 mm und ca. 1000 mm beträgt.

Diese Aufgabe wird erfindungsgemäß gelöst durch die Merkmale des Anspruchs 1. Dazu sind der Mischer und die Düse zum Versprühen des Zuschlagstoffes oder des Reduktionsmittels selbst zu einer konstruktiven und funktionellen Baueinheit kombiniert. Diese Kombination ist in den Gaskanal eingebracht, d. h. beim bestimmungsgemäßen Betrieb dieser baulichen Einheit in diesen eingesetzt. Dadurch entfällt in der Länge schon der Abstand von der Düse zum Mischer einer ersten Mischerstufe, so dass die Kanallänge vorzugsweise auf lediglich das zwei- bis vierfache des Kanaldurchmessers (zwei bis vier Kanaldurchmesser) verkürzt werden kann. Dabei ist weder die Wirkungsweise noch die Wirksamkeit jedes einzelnen Funktionsteils, nämlich der Eindüsfunktion einerseits und der statischen Mischerfunktion andererseits, beeinträchtigt.

Nach einer zweckmäßigen Weiterbildung hat der Rohrkörper des Mischers einen in einem im Querschnitt kreisrunden Gaskanal selbst ebenfalls einen kreisrunden Querschnitt. Der Durchmesser des Gaskanals, in den die bauliche Einheit aus Mischer und Düse einsetzbar ist, sollte zweckmäßigerweise nicht kleiner als ca. 200 mm und nicht größer als ca. 1000 mm sein.

In vorteilhaften Ausgestaltungen des Rohrkörpers beträgt dessen Durchmesser etwa den 0,5- bis 0,2-fachen Durchmesser des Gaskanals. Die Länge des Rohrkörpers entspricht etwa dem 0,2-bis 0,5-fachen Durchmesser des Gaskanals. Dabei ist der Rohrkörper zweckmäßigerweise von einem quer zum Gasstrom in den Gaskanal hineinragenden Rohrstutzen getragen, durch den sich ein als Zuleitung und als Träger für die Düse oder die Eindüsvorrichtung dienendes Rohr bis zur Mittelachse des Rohrkörpers erstreckt.

Die Düse ist vorteilhafterweise im Bereich der Mittelachse des Rohrkörpers - und damit im Einbauzustand der dem Gaskanal und dem Rohrkörper gemeinsamen Mittelachse - angeordnet. In dieser Lage versprüht die Düse oder die Eindüsvorrichtung den Zuschlagstoff, beispielsweise Ammoniak als Reduktionsmittel oder Harnstofflösung als Zuschlagstoff, in Strömungsrichtung des Gasstromes. Ein aus der Düse austretender Sprühkegel schließt dabei an seiner Kegelspitze einen Winkel von 20° bis 60°, vorzugsweise einen Winkel von 30°, ein.

Von den Enden des Rohrkörpers getragene Lamellen bilden mit der Achse des Rohrkörpers vorzugsweise einen Winkel von 30° bis 60°, insbesondere einen Winkel von 45°. Die Lamellen sind derart ausgerichtet, dass sie sich im Einbauzustand der Vorrichtung mit ihren freien Enden an der Innenseite von Wänden des Gaskanals abstützen. Dabei sind die Lamellen an ihren Freienden etwa doppelt so breit wie an ihren mit dem Rohrkörper verbundenen Fußenden. Freie Räume zwischen einander benachbarten Lamellen sind dabei etwa ebenso breit wie die Lamellen selbst.

Zweckmäßigerweise sind stromauf weisende Lamellen gegenüber stromab weisenden Lamellen auf Lücke gesetzt, so dass jeder Teilstrom des Gasstromes verwirbelt ist, wobei jeweils gleich viele stromauf und stromab weisende Lamellen vorgesehen sind. Zweckmäßigerweise trägt der Rohrkörper beidendseitig jeweils vier bis acht Lamellen, die vorzugsweise aus ebenen Blechen bestehen.

Die mit der Erfindung erzielten Vorteile bestehen insbesondere darin, dass infolge der räumlichen und funktionellen Kombination mindestens eines Mischers und einer Düse einer diese Funktionsteile aufweisenden Vorrichtung zum Einbringen eines Zuschlagstoffs, wie z. B. Ammoniak oder Harnstofflösung, in ein Abgas eine besonders kurze Bauweise eines die Vorrichtung aufnehmenden Abgaskanals ohne Gefahr der Verkrustung des Mischers auch bei Verwendung von Harnstofflösung möglich ist.

Grund hierfür ist, dass bei gleichzeitiger Gewährleistung einer Vergleichmäßigung von Temperatur und Geschwindigkeit über den gesamten Kanalquerschnitt nur eine kurze Nachlaufstrecke im Abgaskanal erforderlich ist. Außerdem ist infolge der geringen Komponentenanzahl im Gesamtsystem eine Reduzierung der Fertigungskosten erreicht.

Nachfolgend wird ein Ausführungsbeispiel der Erfindung anhand einer Zeichnung näher erläutert. Darin zeigen:
- FIG 1: in teilweise geschnittener Seitenansicht eine Rauchgasreinigungseinrichtung mit einer kombinierten Misch- und Eindüsvorrichtung,
- FIG 2: die Reinigungseinrichtung in teilweise geschnittener Draufsicht,
- FIG 3: eine Vorderansicht der Reinigungseinrichtung,
- FIG 4: die Reinigungseinrichtung in einem Schnitt entlang der Linie IV-IV in FIG 1, und
- FIG 5: die Reinigungseinrichtung in einem Schnitt entlang der Linie V-V in FIG 1.

Einander entsprechende Teile sind in allen Figuren mit den gleichen Bezugszeichen versehen.

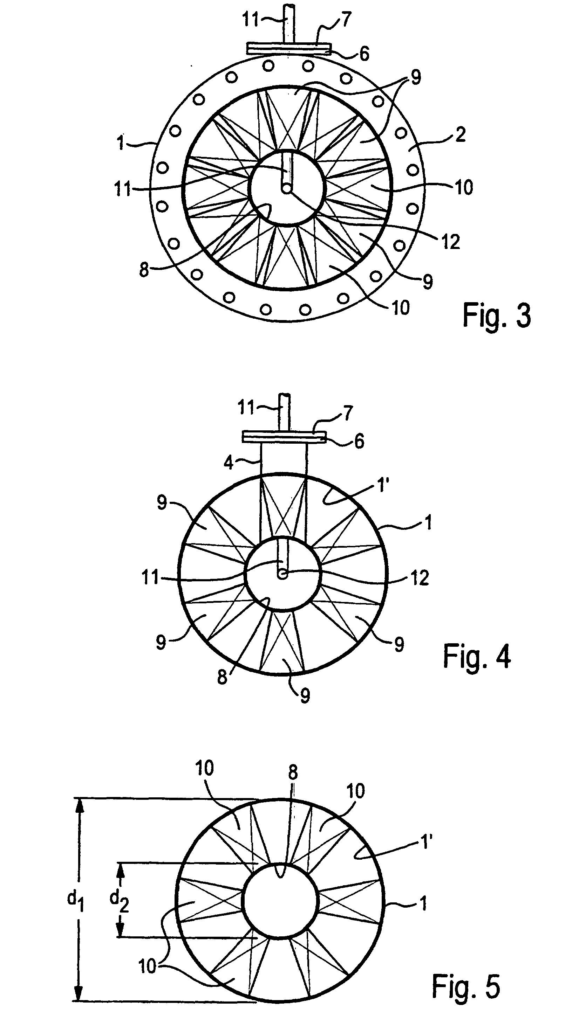

Ein Gas- oder Abgaskanal 1 mit einem Durchmesser d₁ (FIG 5) von beispielsweise 200 mm bis 1000 mm ist mit einem Flansch 2 an einen (nicht dargestellten) vorzugsweise stationären Dieselmotor angeschlossen und wird in Richtung des Pfeiles 3 von Abgas A durchströmt. Ein Rohrstutzen 4 durchdringt die Wand des Abgaskanals 1 und ragt quer zur Strömungsrichtung 3 des Abgases A und damit rechtwinklig zur Kanalachse 5 in den Abgaskanal 1 hinein. Bei gemäß dem Ausführungsbeispiel kreisrundem Kanalquerschnitt verläuft der Rohrstutzen 4 somit radial. Außerhalb des Abgaskanals 1 trägt der Rohrstutzen 4 freiendseitig einen Flansch 6, auf dem eine Endscheibe 7 dicht aufliegt und somit den Innenraum des Rohrstutzens 4 nach außen abschließt.

Das im Abgaskanal 1 liegende Ende des Rohrstutzens 4 trägt einen beidendseitig offenen Rohrkörper 8, der koaxial zum Abgaskanal 1 angeordnet ist. Die Kanalachse 5 bildet somit die Mittelachse sowohl des Abgaskanals 1 als auch des Rohrkörpers 8. Dieser weist einen Durchmesser d₂ (FIG 5) auf, der dem 0,5- bis 0,2-fachen des Durchmessers d₁ des Abgaskanals 1 entspricht. Der Rohrkörper 8 weist eine Länge etwa gleich dem 0,2- bis 0,5-fachen des Durchmessers d₁ des Abgaskanals 1 auf.

Am anströmseitigen Ende des Rohrkörpers 8 sind eine Anzahl von ersten Lamellen 9 befestigt, die bezüglich der Strömungsrichtung 3 des Abgases A stromauf weisen. Eine vorzugsweise gleiche Anzahl zweiter Lamellen 10, die sich entsprechend stromab erstrecken, sind am abströmseitigen Ende des Rohrkörpers 4 befestigt. Die Lamellen 9 und die Lamellen 10 sind gegenseitig auf Lücke gesetzt, d.h. jede der Lamellen 9 liegt in Richtung der Kanalachse 5 gesehen jeweils zwischen zwei Lamellen 10 und umgekehrt. Dies ist aus den Figuren 3 bis 5 vergleichsweise deutlich ersichtlich.

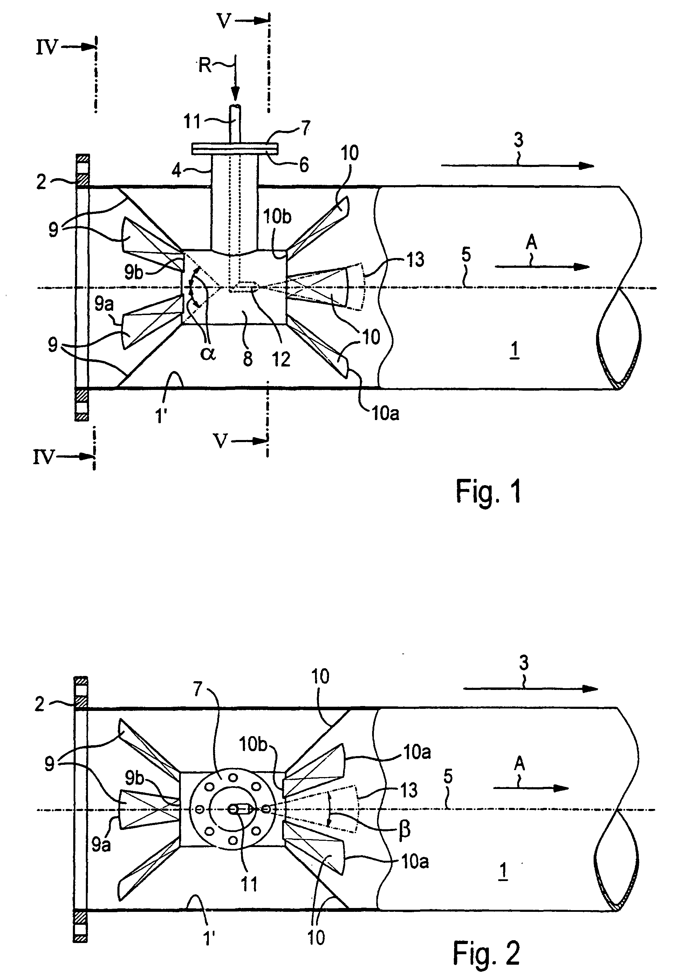

Die Lamellen 9 und 10 bilden mit der Kanalachse 5 jeweils einen Winkel α von 30° bis 60°, vorzugsweise von α = 45° (FIG 1), und stützen sich mit ihren freien Enden 9a bzw. 10a an der Innenseite oder Innenwand 1' des Abgaskanals 1 ab. Die freien Enden oder Freienden 9a, 10a der Lamellen 9 und 10 sind etwa doppelt so breit wie ihre an dem Rohrkörper 8 befestigten Fußenden 9b bzw. 10b. An jedem Ende des Rohrkörpers 8 sind beispielsweise vier bis acht Lamellen 9, 10 befestigt, wobei die Lamellen 9, 10 aus ebenen Blechen bestehen. Sie verursachen dadurch besonders kräftige Wirbel im strömenden Abgas A.

Der Rohrstutzen 4 umfasst ein von der Endscheibe 6 getragenes Rohr 11, an dem freiendseitig in dem Rohrkörper 8 eine Düse 12 gehalten ist. Das Rohr 11 ist in nicht näher dargestellter Art und Weise über eine Leitung an einen Vorratsbehälter für einen ein Reduktionsmittel freisetzenden Zuschlagstoff oder für einen Reduktionsmittelträger R, beispielsweise für eine wässrige Harnstofflösung, sowie zweckmäßigerweise zusätzlich an einen Luftanschluß zur Kühlung und Zerstäubung der beispielsweise wässrigen Harnstofflösung angeschlossen. Eine (nicht dargestellte) Pumpe presst den Reduktionsmittelträger R, z. B. die wässrige Harnstofflösung, oder ein entsprechendes Reduktionsmittel, z. B. Ammoniak, durch das Rohr 11 und durch die Düse 12.

Die geometrischen Abmessungen der Düse 12 sind derart gestaltet, dass bei dem erreichten Förderdruck des Reduktionsmittelträgers R von diesem beim Austritt aus der Düse 12 ein Sprühkegel 13 gebildet ist, dessen Spitze einen Winkel β von 20° bis 60°, vorzugsweise von β = 30° bis 45°, einschließt. Die Düse 12 und der Rohrkörper 8 mit den Lamellen 9 und 10 bilden dadurch eine konstruktive und funktionelle Einheit, wobei der Rohrkörper 8 und die daran befestigten Lamellen 9, 10 funktional einen statischen Mischer oder eine Mischstufe darstellen. Die Düse 12 liegt dabei auf der der Kanalachse 5 entsprechenden gemeinsamen Mittelachse des Abgaskanals 1 und des Mischers 8,9,10.

Im Betrieb strömt heißes Abgas A aus dem Dieselmotor in Strömungsrichtung 3 durch den Abgaskanal 1. Dabei strömt ein geringer Anteil des Abgases A und damit zumindest ein Abgasteilstrom durch den Rohrkörper 8. Beim Erreichen eines vorgegebenen Betriebszustandes wird der Reduktionsmittelträger R durch die Düse 12 in das strömende Abgas A eingesprüht oder eingedüst. Im strömenden Abgas A treten im Bereich des Rohrkörpers 8 durch die Lamellen 9 und 10 verursachte, starke Verwirbelungen auf, die auch den Sprühkegel 13 erfassen und so eine sehr gute Durchmischung des Abgases A mit dem Reduktionsmittelträger R erzwingen.

Bei dem im Abgaskanal 1 herrschenden Zustand wird dann die beispielsweise wässrige Harnstofflösung durch Hydrolyse in Ammoniakgas und Wasser zersetzt, so dass im dadurch gebildeten Gasgemisch beim Erreichen eines dafür geeigneten und vorgesehenen (nicht dargestellten) Katalysators im Abgas A enthaltene Stickoxide praktisch vollständig zu Stickstoff reduziert werden.

## Patentansprüche

1. Vorrichtung zum Einbringen eines Zuschlagstoffes (R) in ein Abgas (A), die in eine Abgasleitung (1) eines Dieselmotors eingebracht ist, mit mindestens einer Düse (12) und mit mindestens einem Mischer (8,9,10) zur Durchmischung des Abgases (A) mit dem Zuschlagstoff (R), wobei der Mischer (8,9,10) und die Düse (12) zu einer konstruktiven und funktionellen Baueinheit miteinander kombiniert sind,
**dadurch gekennzeichnet, dass** der Mischer (8,9,10) einen zumindest annähernd strömungsparallelen Rohrkörper (8) aufweist, der beidendseitig offen ist und dort Lamellen (9 bzw.10) trägt, die bezüglich der Strömungsrichtung (3) des Abgases (A) am stomauf gelegenen Rohrkörperende stromauf und am stromab gelegenen Rohrkörperende stromab weisen.

2. Vorrichtung nach Anspruch 1, **dadurch gekennzeichnet, dass** der Rohrkörper (8) einen kreisrunden Querschnitt aufweist.

3. Vorrichtung nach Anspruch 1 oder 2,
**dadurch gekennzeichnet, dass** der Rohrkörper (8) im Durchmesser (d₂) etwa gleich dem 0,5- bis 0,2-fachen Durchmesser (d₁) des Gaskanals (1) ist.

4. Vorrichtung nach einem der Ansprüche 1 bis 3,
**dadurch gekennzeichnet, dass** der Rohrkörper (8) eine Länge von etwa dem 0,2- bis 0,5-fachen Durchmesser (d₁) des Gaskanal (1) aufweist.

5. Vorrichtung nach einem der Ansprüche 1 bis 4,
**dadurch gekennzeichnet, dass** an den Rohrkörper (8) ein in den Gaskanal (1) hineinragender Rohrstutzen (4) geführt ist, durch den sich ein als Zuleitung und als Träger für die Düse (12) dienendes Rohr (11) bis in den Rohrkörper (8) hinein erstreckt.

6. Vorrichtung nach einem der Ansprüche 1 bis 5,
**dadurch gekennzeichnet, dass** die Düse (12) derart auf der Mittelachse (5) des Mischers (8,9,10) liegt, dass der Zuschlagstoff (R) in Strömungsrichtung (3) des Abgases (A) versprühbar ist.

7. Vorrichtung nach einem der Ansprüche 1 bis 6,
**dadurch gekennzeichnet, dass** die von den Enden des Rohrkörpers (8) getragenen Lamellen (9,10) mit der Achse (5) des Rohrkörpers (8) einen Winkel (α) von 30° bis 60°, vorzugsweise von α = 45°, bilden und zur Abstützung freiendseitig gegen die Innenseite (1') des Gaskanals (1) gerichtet sind.

8. Vorrichtung nach einem der Ansprüche 1 bis 7,
**dadurch gekennzeichnet, dass** die Lamellen (9,10) an ihren freien Enden (9a,10a) etwa doppelt so breit sind wie an ihren mit dem Rohrkörper (8) verbundenen Fußenden (9b, 10b).

9. Vorrichtung nach einem der Ansprüche 1 bis 8,
**dadurch gekennzeichnet , dass** freie Räume zwischen benachbarten Lamellen (9 oder 10) etwa ebenso breit sind wie die Lamellen (9,10) selbst.

10. Vorrichtung nach einem der Ansprüche 1 bis 9,
**dadurch gekennzeichnet , dass** stromauf weisende Lamellen (9) gegenüber stromab weisenden Lamellen (10) auf Lücke gesetzt sind.

11. Vorrichtung nach einem der Ansprüche 1 bis 10,
**dadurch gekennzeichnet , dass** jeweils gleich viele stromauf und stromab weisende Lamellen (9,10) vorgesehen sind.

12. Vorrichtung nach einem der Ansprüche 1 bis 11,
**dadurch gekennzeichnet, dass** der Rohrkörper (8) beidendseitig gleich viele, beispielsweise vier bis acht, Lamellen (9,10) trägt.

13. Vorrichtung nach einem der Ansprüche 1 bis 12,
**dadurch gekennzeichnet, dass** die Lamellen (9,10) aus ebenen Blechen bestehen.

## Claims

1. Device for introducing an additive (R) into an exhaust gas (A), which is introduced into an exhaust gas line (1) from a diesel engine, having at least one nozzle (12) and having at least one mixer (8, 9, 10), for mixing the exhaust gas (A) with the additive (R), in which device the mixer, (8, 9, 10) and the nozzle (12) are combined with one another to form a structural and functional unit, **characterized in that** the mixer (8, 9, 10) has a tubular body (8) which is at least approximately parallel in terms of flow, is open at both end sides and, at those sides, bears lamellae (9 or 10), which, with regard to the direction of flow (3) of the exhaust gas (A), face upstream at the upstream end of the tubular body and face downstream at the downstream end of the tubular body.

2. Device according to Claim 1, **characterized in that** the tubular body (8) is circular in cross section.

3. Device according to Claim 1 or 2, **characterized in that** the tubular body (8), in terms of its diameter (d₂), is approximately equal to 0.5 to 0.2 times the diameter (d₁) of the gas duct (1).

4. Device according to one of Claims 1 to 3, **characterized in that** the tubular body (8) has a length which is approximately 0.2 to 0.5 times the diameter (d₁) of the gas duct (1).

5. Device according to one of Claims 1 to 4, **characterized in that** a tubular connection piece (4), which projects into the gas duct (1), is guided onto the tubular body (8), through which connection piece a tube (11), which serves as a feed line and as a support for the nozzle (12), extends into the tubular body (8).

6. Device according to one of Claims 1 to 5, **characterized in that** the nozzle (12) lies on the centre axis (5) of the mixer (8, 9, 10), in such a manner that the additive (R) can be sprayed in the direction of flow (3) of the exhaust gas (A).

7. The device according to one of Claims 1 to 6, **characterized in that** the lamellae (9, 10) which are supported by the ends of the tubular body (8) form an angle (α) of 30° to 60°, preferably of α = 45°, with the axis (5) of the tubular body (8) and, for support, are directed at their free ends onto the inner side (1') of the gas duct (1).

8. Device according to one of Claims 1 to 7, **characterized in that** the lamellae (9, 10) at their free ends (9a, 10a), are approximately twice as wide as at their root ends (9b, 10b), which are connected to the tubular body (8).

9. The device according to one of Claims 1 to 8, **characterized in that** free spaces between adjacent lamellae (9 or 10) are approximately as wide as the lamellae (9, 10) themselves.

10. Device according to one of Claims 1 to 9, **characterized in that** lamellae (9) which face upstream are arranged staggered with respect to lamellae (10) which face downstream.

11. Device according to one of Claims 1 to 10, **characterized in that** there are in each case an identical number of lamellae (9, 10) facing upstream and downstream.

12. Device according to one of Claims 1 to 11, **characterized in that** the tubular body (8) bears the same number of, for example, four to eight, lamellae (9, 10) at both end sides.

13. Device according to one of Claims 1 to 12, **characterized in that** the lamellae (9, 10) comprise planar metal sheets.

## Revendications

1. Dispositif pour introduire une substance additive (R) dans des gaz usés (A), substance qui est introduite dans une conduite de gaz usés (1) d'un moteur diesel, comprenant au moins une buse (12) et au moins un mélangeur (8, 9, 10) destiné à mélanger intimement les gaz usés (A) avec la substance additive (R), le mélangeur (8, 9, 10) et la buse (12) étant combinés entre eux pour former une unité sous le rapport de la construction et du fonctionnement,
**caractérisé en ce que** le mélangeur (8, 9, 10) présente un corps tubulaire (8) au moins à peu près parallèle à l'écoulement, qui est ouvert à ses deux extrémités et là, porte des lamelles (9 et 10 respectivement) qui pointent vers l'amont à l'extrémité du corps tubulaire placée en amont et vers l'aval à l'extrémité du corps tubulaire placée en aval, relativement au sens de l'écoulement (3) des gaz usés (A).

2. Dispositif selon la revendication 1, **caractérisé en ce que** le corps tubulaire (8) présente une section circulaire.

3. Dispositif selon la revendication 1 ou 2, **caractérisé en ce que** le corps tubulaire (8) est, en diamètre (d₂), à peu près égal à 0,5 à 0,2 fois le diamètre (d₁)du conduit de gaz usés (1).

4. Dispositif selon l'une des revendications 1 à 3, **caractérisé en ce que** le corps tubulaire (8) possède une longueur d'environ 0,2 à 0,5 fois le diamètre (d₁) du conduit de gaz usés (1).

5. Dispositif selon l'une des revendications 1 à 4, **caractérisé en ce qu'**au corps tubulaire (8) est amenée une tubulure (4) qui est engagée dans le conduit de gaz (1), à travers laquelle un tube (11) qui sert de conduite d'amenée et de support pour la buse (2), s'étend jusque dans le corps tubulaire (8).

6. Dispositif selon l'une des revendications 1 à 5, **caractérisé en ce que** la buse (2) se trouve sur l'axe médian (5) du mélangeur (8, 9, 10) de telle manière que la substance additive (R) puisse être pulvérisée dans le sens de l'écoulement (3) des gaz usés (A).

7. Dispositif selon l'une des revendications 1 à 6, **caractérisé en ce que** les lamelles (9, 10) qui sont portées par les extrémités du corps tubulaire (8) forment avec l'axe (5) du corps tubulaire (8) un angle (α) de 30 ° à 60 °, de préférence de α = 45 °, et pour prendre appui, sont dirigées par leurs extrémités libres vers le côté intérieur (1') du conduit de gaz (1).

8. Dispositif selon l'une des revendications 1 à 7, **caractérisé en ce qu'**à leurs extrémités libres (9a, 10a), les lamelles (9, 10) sont à peu près deux fois plus larges qu'à leurs extrémités de pied (9b, 10b) qui sont fixées au corps tubulaire (8).

9. Dispositif selon l'une des revendications 1 à 8, **caractérisé en ce que** des espaces libres entre lamelles adjacentes (9 ou 10) sont à peu près aussi larges que les lamelles (9, 10) elles-mêmes.

10. Dispositif selon l'une des revendications 1 à 9, **caractérisé en ce que** les lamelles (9) qui pointent vers l'amont sont placées en quinconce par rapport aux lamelles (10) qui pointent vers l'aval.

11. Dispositif selon l'une des revendications 1 à 10, **caractérisé en ce qu'**il est prévu autant de lamelles pointant vers l'amont que de lamelles pointant vers l'aval (9, 10).

12. Dispositif selon l'une des revendications 1 à 11, **caractérisé en ce que** le corps tubulaire (8) porte des nombres égaux de lamelles (9, 10), par exemple quatre à huit, à ses deux extrémités.

13. Dispositif selon l'une des revendications 1 à 12, **caractérisé en ce que** les lamelles (9, 10) sont constituées par des tôles planes.
